# EUROPEAN PATENT APPLICATION

(11) **EP 4 748 746 A1**
(43) Date of publication of application: **27.05.2026**
(21) Application number: 24868787.3
(22) Date of filing: 19.09.2024
(51) Int. Cl.: B65D 85/672, B65D 85/66, B65D 71/14, B65D 88/12, H01M 4/04

(54) **ELECTRODE ROLL PACKAGE AND MANUFACTURING METHOD THEREOF**

(30) Priority: 21.09.2023 KR 20230126172
(71) Applicant: LG Energy Solution, Ltd., Seoul 07335 (KR)
(72) Inventor: LIM, Hee Young, Daejeon 34122 (KR); KOO, Jae Pil, Daejeon 34122 (KR)
(74) Representative: Plasseraud IP
(86) International application number: PCT/KR2024/096165
(87) International publication number: WO 2025/063813

(57) **Abstract**

The present technology provides an electrode roll package including a bobbin, an electrode roll including an electrode sheet wound around the bobbin, a protective cover configured to surround the electrode roll, and a sealing cover configured to cover the electrode roll and the protective cover to seal the electrode roll and the protective cover.

## Description

### [Technical Field]

The present invention relates to an electrode roll package and a manufacturing method thereof.

This application claims the benefit of priority based on Korean Patent Application No. 10-2023-0126172, filed on September 21, 2023, and the entire content of the Korean patent application is incorporated herein by reference.

### [Background Art]

With the development of technologies of mobile devices and an increase of the demand for mobile devices, the demand for secondary batteries is sharply increasing. Among secondary batteries, lithium secondary batteries have been widely used as energy sources of various types of electronic products as well as various types of mobile devices in terms of high energy density, a high operating voltage, and excellent preservation and lifespan characteristics thereof. Recently, as the field of application of secondary batteries expands, the demand for higher-capacity secondary batteries is increasing rapidly.

Generally, during the manufacture of a secondary battery, an electrode sheet is manufactured by coating a current collector with an electrode active material, and a subsequent process (e.g., an assembly process) is performed on the electrode sheet. Generally, after an electrode roll is manufactured by winding the electrode sheet into a roll, the electrode roll is transferred to equipment for performing a subsequent process.

### [Disclosure]

### [Technical Problem]

The present invention is directed to providing an electrode roll package.

The present invention is also directed to providing a manufacturing method of an electrode roll package.

### [Technical Solution]

An aspect of the present invention provides an electrode roll package including a bobbin, an electrode roll including an electrode sheet wound around the bobbin, a protective cover configured to surround the electrode roll, and a sealing cover configured to cover the electrode roll and the protective cover to seal the electrode roll and the protective cover.

In example embodiments, a width of the protective cover may be greater than a width of the electrode roll.

In example embodiments, the electrode sheet may include a coated part coated with an electrode slurry layer and an uncoated part that is not coated with the electrode slurry layer, and the coated part and the uncoated part of the electrode sheet may be covered with the protective cover.

In example embodiments, the coated part and the uncoated part of the electrode sheet may be spaced apart from the sealing cover with the protective cover therebetween.

In example embodiments, the protective cover may include polycarbonate.

In example embodiments, the sealing cover may include vinyl.

In example embodiments, hardness of the protective cover may be greater than hardness of the sealing cover.

In example embodiments, a coefficient of friction of the protective cover may be less than a coefficient of friction of the sealing cover.

In example embodiments, the sealing cover may be fixed to opposite sides of the bobbin that protrude laterally from the electrode roll by an adhesive tape.

In example embodiments, the protective cover may provide a hollow portion for accommodation of the electrode roll, and a size of the hollow portion of the protective cover may be configured to be variable.

An aspect of the present invention provides a method of manufacturing an electrode roll package, the method including forming an electrode roll by winding an electrode sheet around a bobbin, covering the electrode sheet with a protective cover to accommodate the electrode roll in a hollow portion of the protective cover, and sealing the electrode roll and the protective cover with a sealing cover.

In example embodiments, a width of the protective cover may be greater than a width of the electrode roll, the electrode sheet may include a coated part coated with an electrode slurry layer and an uncoated part that is not coated with the electrode slurry layer, and the uncoated part of the electrode sheet may be covered with the protective cover.

In example embodiments, the protective cover may surround the electrode roll to prevent the uncoated part of the electrode sheet from being in contact with the sealing cover.

In example embodiments, hardness of the protective cover may be greater than hardness of the sealing cover.

In example embodiments, the protective cover may include polycarbonate, and the sealing cover may include vinyl.

### [Advantageous Effects]

According to example embodiments of the present invention, an electrode roll is covered with a high-hardness protective cover to prevent damage to the electrode roll during the transfer of an electrode roll package.

In addition, according to example embodiments of the present invention, the protective cover in contact with the electrode roll is formed of a material with a small coefficient of friction to prevent damage to the electrode roll due to friction.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of an electrode roll package according to example embodiments of the present invention.
FIG. 2 is a schematic plan view of the electrode roll package of FIG. 1.
FIG. 3 is a flowchart of a method of manufacturing an electrode roll package according to example embodiments of the present invention.
FIGS. 4A and 4B are diagrams illustrating a method of manufacturing an electrode roll package according to example embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

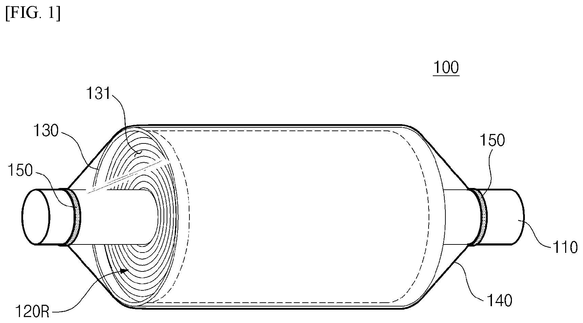

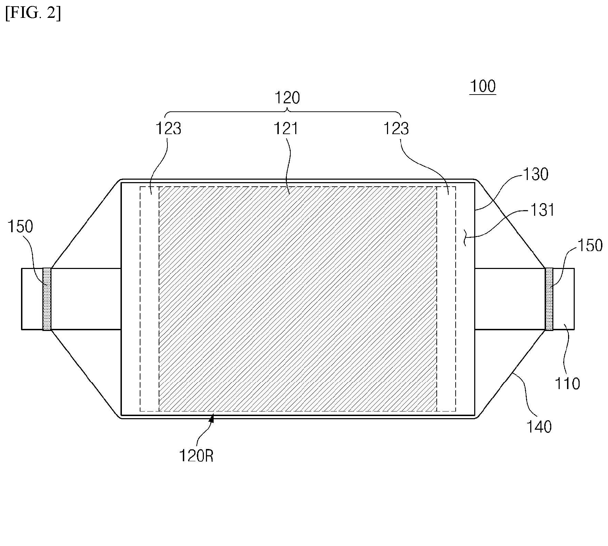

FIG. 1 is a perspective view of an electrode roll package 100 according to example embodiments of the present invention. FIG. 2 is a schematic plan view of the electrode roll package 100 of FIG. 1.

Referring to FIGS. 1 and 2, the electrode roll package 100 may include a bobbin 110, an electrode roll 120R including an electrode sheet 120 wound around the bobbin 110, a protective cover 130, and a sealing cover 140.

The electrode sheet 120 may be provided by being wound around the bobbin 110 of a cylinder shape. The electrode sheet 120 may be wound around the bobbin 110 to form the electrode roll 120R.

The electrode sheet 120 may include a substrate, and an electrode slurry layer applied to at least one of opposite surfaces of the substrate. The substrate may be a current collector including, for example, copper or aluminum. The electrode slurry layer may include a positive electrode active material or a negative electrode active material.

The electrode sheet 120 may include a coated part 121 coated with the electrode slurry layer, and an uncoated part 123 which is not coated with the electrode slurry layer. In the coated part 121 of the electrode sheet 120, a surface of the substrate may be covered with the electrode slurry layer not to be exposed to the outside. In the uncoated part 123 of the electrode sheet 120, the surface of the substrate may be exposed. The uncoated part 123 of the electrode sheet 120 may be provided at opposite edge parts of the electrode sheet 120 in a width direction of the electrode sheet 120.

The electrode roll 120R may be surrounded by the protective cover 130. The protective cover 130 may provide a hollow portion 131 for accommodation of the electrode roll 120R. When the electrode roll 120R is inserted into the hollow portion 131 of the protective cover 130, an outer surface of the electrode roll 120R may be surrounded and covered by the protective cover 130.

The outer surface of the electrode roll 120R may be completely surrounded by the protective cover 130. A width of the protective cover 130 may be greater than a width of the electrode roll 120R. The width of the protective cover 130 and the width of the electrode roll 120R may be understood as lengths thereof in a direction parallel to a direction in which the bobbin 110 extends. When the electrode roll 120R is inserted into the hollow portion 131 of the protective cover 130, the coated part 121 and the uncoated part 123 of the electrode sheet 120 may be surrounded and covered by the protective cover 130. The protective cover 130 may be formed of a material with high hardness, strength, elasticity, heat resistance, and/or transmittivity.

The protective cover 130 may protect the electrode roll 120R from external impact. To protect the electrode roll 120R from external impact, the protective cover 130 may be formed of a high-hardness material.

The protective cover 130 may face the electrode roll 120R and come into direct contact with the electrode roll 120R. The protective cover 130 may be formed of a material with a small coefficient of friction to prevent damage to the electrode sheet 120 caused by friction between the protective cover 130 and the electrode sheet 120.

In example embodiments, the protective cover 130 may include a plastic material with high hardness. In example embodiments, the protective cover 130 may include polycarbonate.

In example embodiments, the protective cover 130 may be a single piece. In example embodiments, the protective cover 130 may include a plurality of bodies that are detachably coupled to each other. In example embodiments, the protective cover 130 may include a plurality of bodies that overlap each other in a radial direction.

A size (e.g., a diameter) of the hollow portion 131 of the protective cover 130 for accommodation of the electrode roll 120R may be configured to be variable. In example embodiments, the size (e.g., diameter) of the hollow portion 131 of the protective cover 130 may be adjusted according to a size (e.g., an outer diameter) of the electrode roll 120R. For example, the size of the hollow portion 131 of the protective cover 130 may be adjusted using a bolt or hinge on the protective cover 130. For example, when the protective cover 130 includes a first part and a second part that overlap each other in a radial direction of the electrode roll 120R, the size of the hollow portion 131 of the protective cover 130 may be adjusted by adjusting a position, in a circumferential direction of the protective cover 130, where a coupling protrusion provided in the first part of the protective cover 130 is fastened to the second part of the protective cover 130. For example, when the protective cover 130 includes the first and second parts that overlap each other in the radial direction of the electrode roll 120R, a bolt may be screw-fastened to the second part of the protective cover 130 while being passed through the first part of the protective cover 130. In this case, a distance between the first and second parts of the protective cover 130 may be adjusted in the radial direction of the electrode roll 120R by rotating the bolt in a fastening direction or an unscrewing direction opposite to the fastening direction, thereby adjusting the size of the hollow portion 131 of the protective cover 130. For example, when the protective cover 130 includes a plurality of segments that are arranged in the circumferential direction of the protective cover 130 and fastened to each other by a bolt, a distance between the plurality of segments of the protective cover 130 may be adjusted in the circumferential direction of the protective cover 130 by rotating the bolt, thereby adjusting the size of the hollow portion 131 of the protective cover 130.

The sealing cover 140 may seal the electrode roll 120R and the protective cover 130. The sealing cover 140 may cover the electrode sheet 120 and the protective cover 130 and be fixed to opposite sides of the bobbin 110 protruding laterally from the electrode roll 120R. For example, the sealing cover 140 may be adhered and fixed to opposite sides of the bobbin 110, which protrude laterally from the electrode roll 120R, via an adhesive tape 150. Through the adhesive tape 150, the sealing cover 140 may be fixed to one side of the bobbin 110 such that there is no gap between the sealing cover 140 and the side of the bobbin 110 protruding laterally from the electrode roll 120R. Through the adhesive tape 150, the sealing cover 140 may also be fixed to another side of the bobbin 110 such that there is no gap between the sealing cover 140 and the other side of the bobbin 110 protruding laterally from the electrode roll 120R. As the sealing cover 140 is fixed to the opposite sides of the bobbin 110 via the adhesive tape 150, a sealing space for sealing the electrode roll 120R and the protective cover 130 may be formed.

The sealing cover 140 may be formed of a packaging material, e.g., a flexible material. In example embodiments, the sealing cover 140 may include vinyl.

The material of the protective cover 130 may be different from the material of the sealing cover 140.

In example embodiments, the hardness of the material of the protective cover 130 may be greater than the hardness of the material of the sealing cover 140.

In example embodiments, a coefficient of friction of the material of the protective cover 130 may be less than a coefficient of friction of the material of the sealing cover 140.

The sealing cover 140 may cover and seal the electrode roll 120R and the protective cover 130, and the coated part 121 and the uncoated part 123 of the electrode sheet 120 may be spaced apart from the sealing cover 140 with the protective cover 130 therebetween. The protective cover 130 may prevent the sealing cover 140 from being in contact with the coated part 121 and the uncoated part 123 of the electrode sheet 120 to preventing damage to the electrode sheet 120 caused by friction between the sealing cover 140 and the electrode sheet 120.

### (Second Embodiment)

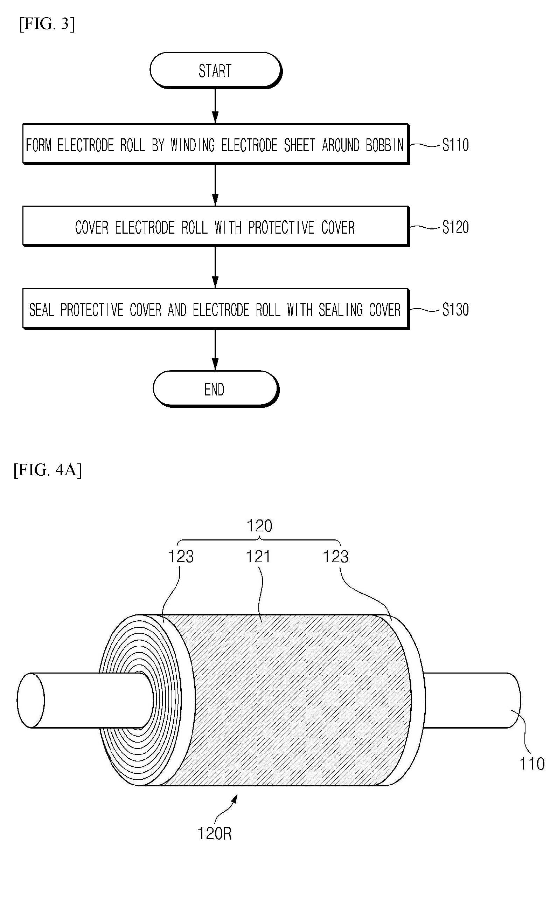

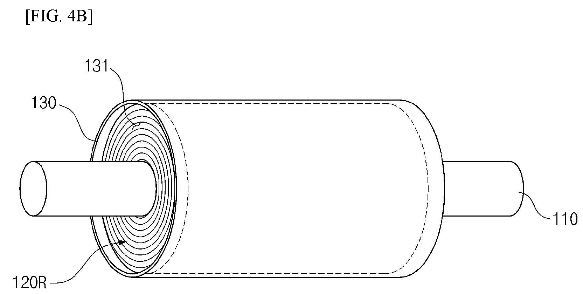

FIG. 3 is a flowchart of a method of manufacturing the electrode roll package 100 according to example embodiments of the present invention. FIGS. 4A and 4B are diagrams illustrating a method of manufacturing the electrode roll package 100 according to example embodiments of the present invention.

A method of manufacturing the electrode roll package 100 of FIGS. 1 and 2 will be described with reference to FIGS. 3, 4A and 4B below.

Referring to FIG. 4A, the electrode sheet 120 is wound around the bobbin 110 to form the electrode roll 120R (S110). In operation S110, the electrode sheet 120 may be manufactured by a coating process of applying an electrode slurry layer on a substrate. The electrode sheet 120 on which the coating process has been performed may be wound around the bobbin 110 to form the electrode roll 120R.

Referring to FIG. 4B, the electrode roll 120R is covered with the protective cover 130 to insert the electrode roll 120R into the hollow portion 131 of the bobbin 110 (S120). In operation S120, the protective cover 130 may cover the entire outer surface of the electrode roll 120R. In some example embodiments, before operation S 120 is performed, the size of the hollow portion 131 of the protective cover 130 may be adjusted based on an outer diameter of the electrode roll 120R.

Referring to FIG. 1, the electrode roll 120R and the protective cover 130 are covered with the sealing cover 140 (S130). After covering the electrode roll 120R and the protective cover 130 with the sealing cover 140, one side of the sealing cover 140 may be fixed to one side of the bobbin 110, which protrudes laterally from the electrode roll 120R, using the adhesive tape 150, and another side of the sealing cover 140 may be fixed to another side of the bobbin 110, which protrudes laterally from the electrode roll 120R, using the adhesive tape 150. As the sealing cover 140 is fixed to opposite sides of the bobbin 110 by the adhesive tape 150, the electrode roll 120R and the protective cover 130 may be sealed with the sealing cover 140.

As a comparative example, when an electrode roll is packaged only with a vinyl packaging material, the electrode roll may be damaged due to external impact during the transfer of the electrode roll or an uncoated part of an electrode sheet may be damaged caused by friction between the packaging material and the uncoated part of the electrode sheet.

According to example embodiments of the present invention, the electrode roll 120R is covered with the protective cover 130 with high hardness to prevent damage to the electrode roll 120R during the transfer of the electrode roll package 100.

In addition, according to example embodiments of the present invention, the protective cover 130 in contact with the electrode roll 120R is formed of a material with a small coefficient of friction to prevent damage to the electrode roll 120R due to friction.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. An electrode roll package comprising:
a bobbin;
an electrode roll including an electrode sheet wound around the bobbin;
a protective cover configured to surround the electrode roll; and
a sealing cover configured to cover the electrode roll and the protective cover to seal the electrode roll and the protective cover.

2. The electrode roll package of claim 1, wherein
a width of the protective cover is greater than a width of the electrode roll.

3. The electrode roll package of claim 1, wherein
the electrode sheet comprises a coated part coated with an electrode slurry layer and an uncoated part that is not coated with the electrode slurry layer,
wherein the coated part and the uncoated part of the electrode sheet are covered with the protective cover.

4. The electrode roll package of claim 3, wherein
the coated part and the uncoated part of the electrode sheet are spaced apart from the sealing cover with the protective cover therebetween.

5. The electrode roll package of claim 1, wherein
the protective cover comprises polycarbonate.

6. The electrode roll package of claim 1, wherein
the sealing cover comprises vinyl.

7. The electrode roll package of claim 1, wherein
a hardness of the protective cover is greater than a hardness of the sealing cover.

8. The electrode roll package of claim 1, wherein
a coefficient of friction of the protective cover is less than a coefficient of friction of the sealing cover.

9. The electrode roll package of claim 1, wherein
the sealing cover is fixed to opposite sides of the bobbin that protrude laterally from the electrode roll by an adhesive tape.

10. The electrode roll package of claim 1, wherein
the protective cover provides a hollow portion for accommodation of the electrode roll,
wherein a size of the hollow portion of the protective cover is configured to be variable.

11. A method of manufacturing an electrode roll package, comprising: forming an electrode roll by winding an electrode sheet around a bobbin;
covering the electrode sheet with a protective cover to accommodate the electrode roll in a hollow portion of the protective cover; and
sealing the electrode roll and the protective cover with a sealing cover.

12. The method of claim 11, wherein
a width of the protective cover is greater than a width of the electrode roll,
wherein the electrode sheet comprises a coated part coated with an electrode slurry layer and an uncoated part that is not coated with the electrode slurry layer, and
wherein the uncoated part of the electrode sheet is covered with the protective cover.

13. The method of claim 12, wherein
the protective cover surrounds the electrode roll to prevent the uncoated part of the electrode sheet from being in contact with the sealing cover.

14. The method of claim 11, wherein
a hardness of the protective cover is greater than a hardness of the sealing cover.

15. The method of claim 11, wherein
the protective cover comprises polycarbonate, and
wherein the sealing cover comprises vinyl.
